# EUROPEAN PATENT APPLICATION

(11) **EP 4 231 511 A1**
(43) Date of publication of application: **23.08.2023**
(21) Application number: 23156851.0
(22) Date of filing: 15.02.2023
(51) Int. Cl.: H02M 1/00, H02M 1/32, H02M 7/12, H02M 7/5387, H02M 7/219

(54) **THERMAL REGULATION OF DRIVE IN AIR CONDITIONING SYSTEMS**

(30) Priority: 16.02.2022 US 202263310691 P
(71) Applicant: Carrier Corporation, Palm Beach Gardens, FL 33418 (US)
(72) Inventor: PIAO, Chengzhu, Bloomfield, 06002 (US); AGIRMAN, Ismail, Bloomfield, 06002 (US); BORISOV, Konstantin, Bloomfield, 06002 (US); GINSBERG, David, Farmington, 06032 (US)
(74) Representative: Dehns

(57) **Abstract**

An air conditioning system (100) includes a compressor (104) including a motor (102), a condenser (106), and an evaporator (108); a drive (101) including converter (200) and an inverter (110), the converter (200) and the inverter (110) including power switching devices (211); a temperature sensor (402) configured to sense a temperature in at least one of the converter (200) and the inverter (110); a controller (340) configured to communicate with the temperature sensor (402), the controller (340) configured to provide a control signal to the inverter (110), the controller (340) configured to execute: monitor the temperature; compare the temperature to a threshold; when the temperature exceeds the threshold, executing an operation to reduce a switching frequency of the power switching devices (211) in the inverter (110).

## Description

Exemplary embodiments of this invention pertain to the art of air conditioning systems, and more specifically, to thermal regulation of a drive in air conditioning systems.

Air conditioning systems have transitioned from mechanically driven components to electrically driven components. Electrically driven air conditioning systems utilize power electronics to generate electrical power suitable for various components of the air conditioning system. A drive includes a converter and an inverter to generate electrical power for the air conditioning system. The converter and the inverter include power switching devices (e.g., IGBTs or MOSFETs). A power switching device may be damaged if its temperature exceeds a threshold. To avoid damage to the power switching devices, the air conditioning system is shut down in the event the temperature of a power switching device exceeds the threshold. It is undesirable to shut down the air conditioning system every time the temperature of a power switching device exceeds the threshold.

According to a first aspect, there is provided an air conditioning system includes a compressor including a motor, a condenser, and an evaporator; a drive including converter and an inverter, the converter and the inverter including power switching devices; a temperature sensor configured to sense a temperature in at least one of the converter and the inverter; a controller configured to communicate with the temperature sensor, the controller configured to provide a control signal to the inverter, the controller configured to execute: monitor the temperature; compare the temperature to a threshold; when the temperature exceeds the threshold, executing an operation to reduce a switching frequency of the power switching devices in the inverter.

The operation to reduce the switching frequency of the power switching devices in the inverter may include increasing a period of a carrier signal of the control signal provided to the power switching devices in the inverter.

The controller may be further configured to execute: after executing the operation to reduce the switching frequency of the power switching devices in the inverter, determining if the temperature has increased; when the temperature has increased, executing a second operation to reduce the switching frequency of the power switching devices in the inverter.

The second operation to reduce the switching frequency of the power switching devices in the inverter may include using hybrid pulse width modulation (HPWM) control of the power switching devices in the inverter.

The controller may be further configured to execute: after executing the second operation to reduce the switching frequency of the power switching devices in the inverter, determining if the temperature has increased; when the temperature has increased, initiating a reduction in a compressor load on the air conditioning system.

Initiating the reduction in the compressor load on the air conditioning system may include reducing a speed of the compressor.

Initiating the reduction in the compressor load on the air conditioning system may include reducing refrigerant flow through the compressor.

The converter may be a Vienna rectifier.

The controller may be further configured to provide a control signal to the converter.

According to a second aspect, there is provided a method of controlling an air conditioning system including a compressor including a motor, a condenser, an evaporator and a drive including a converter and an inverter, the converter and the inverter including power switching devices, the method includes: monitoring a temperature in at least one of the converter and the inverter; comparing the temperature to a threshold; when the temperature exceeds the threshold, executing an operation to reduce a switching frequency of the power switching devices in the inverter.

The operation to reduce the switching frequency of the power switching devices in the inverter may include increasing a period of a carrier signal of a control signal provided to the power switching devices in the inverter.

The method may include, after executing the operation to reduce the switching frequency of the power switching devices in the inverter, determining if the temperature has increased; and when the temperature has increased, the method may include executing a second operation to reduce the switching frequency of the power switching devices in the inverter.

The second operation to reduce the switching frequency of the power switching devices in the inverter may include using hybrid pulse width modulation (HPWM) control of the power switching devices in the inverter.

The method may include after executing the second operation to reduce the switching frequency of the power switching devices in the inverter, determining if the temperature has increased; when the temperature has increased, the method may include initiating a reduction in a compressor load on the air conditioning system.

Initiating the reduction in the compressor load on the air conditioning system may include reducing a speed of the compressor.

Initiating the reduction in the compressor load on the air conditioning system may include reducing refrigerant flow through the compressor.

When the temperature exceeds the threshold, the method may include executing an operation to reduce a switching frequency of the power switching devices in the converter.

Certain exemplary embodiments will now be described in greater detail by way of example only and with reference to the accompanying drawings in which:
FIG. 1 is a block diagram of an air conditioning system; and
FIG. 2 is a flowchart of a process of controlling temperature of a drive in an air conditioning system.

A detailed description of one or more embodiments of the disclosed apparatus and method are presented herein by way of exemplification and not limitation with reference to the Figures.

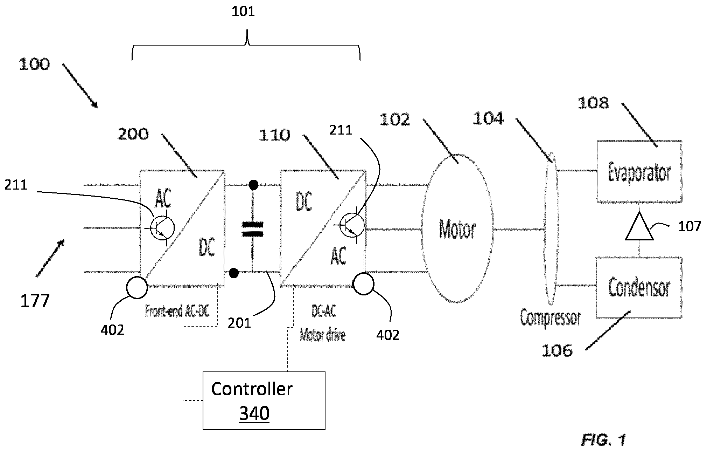

FIG. 1 is a block diagram of air conditioning system 100 in an example embodiment. The air conditioning system 100 may be configured to condition air in a building, such as a chiller, roof top unit, heat pump, etc. The air conditioning system 100 may be configured to condition air for refrigerated environments, such as a refrigerated container, a refrigerated trailer, refrigerator/freezer, etc.

The air conditioning system 100 includes a variable speed motor 102 that is coupled to a compressor 104. The compressor 104 includes an impeller/rotor that rotates and compresses liquid refrigerant to a superheated refrigerant vapor for delivery to a condenser 106. In the condenser 106, the refrigerant vapor is liquefied at high pressure and rejects heat (e.g., to the outside air via a condenser fan in an air-cooled application). The liquid refrigerant exiting condenser 106 is delivered to an evaporator 108 through an expansion valve 107. The refrigerant passes through the expansion valve 107 where a pressure drop causes the high-pressure liquid refrigerant to achieve a lower pressure combination of liquid and vapor. As fluid passes the evaporator 108, the low-pressure liquid refrigerant evaporates, absorbing heat from the fluid, thereby cooling the fluid and evaporating the refrigerant. The low-pressure refrigerant is again delivered to compressor 104 where it is compressed to a high-pressure, high temperature gas, and delivered to condenser 106 to start the refrigeration cycle again. It is to be appreciated that while a specific air conditioning system is shown in FIG. 1, the present teachings may be applicable to any air conditioning system.

As shown in FIG. 1, the compressor 104 is driven by a variable speed motor 102 coupled to a drive 101 including an alternating current (AC) - direct current (DC) converter 200 and a DC-AC inverter 110. The drive 101 is powered from an AC power source 177. The AC power source 177 may be an engine-driven generator or an AC grid (also referred to as mains). AC input voltage from the AC power source 177 is supplied through the AC-DC converter 200. In addition to the motor 102, the drive 101 may power other components of the air conditioning system, such as an evaporator fan, a condenser fan, etc.

The AC-DC converter 200 includes solid-state electronics in the form of power switching devices 211 (e.g., IGBTs or MOSFETs) to convert the AC input voltage from AC power source 177 to a DC voltage across a DC bus 201. In an example embodiment, the AC-DC converter 200 is a Vienna rectifier. The converter 200 may be controlled by a controller 340 using controls signals (e.g., PWM control). The DC-AC inverter 110 includes solid-state electronics in the form of power switching devices 211 (e.g., IGBTs or MOSFETs) to produce multiphase, AC output voltage. In an embodiment, DC-AC inverter 110 converts the DC voltage from the converter 200 into a multiphase, AC output voltage, at a desired frequency and/or magnitude in order to drive the multiphase motor 102. The DC-AC inverter 110 may also convert DC voltage from DC power source 179 into a multiphase, AC output voltage, at a desired frequency and/or magnitude in order to drive the multiphase motor 102. The DC-AC inverter 110 may be controlled by the controller 340 using controls signals (e.g., PWM control).

The controller 340 may be implemented using a general-purpose microprocessor executing a computer program stored on a storage medium to perform the operations described herein. Alternatively, the controller 340 may be implemented in hardware (e.g., ASIC, FPGA) or in a combination of hardware/software. The controller 340 may also be part of an air conditioning control system.

The controller 340 operates the AC-DC converter 200 and the DC-AC inverter 110 to prevent the temperature of the power switching devices 211 from exceeding a threshold. One or more sensors 402 are used to monitor temperature of the power switching devices 211 in the AC-DC converter 200 and/or the DC-AC inverter 110. The sensors 402 may be temperature sensors, but other types of sensors may indicate the temperature (e.g., a current sensor may be indicative of temperature). The sensors 402 may communicate with the controller 340 by a wired and/or wireless connection.

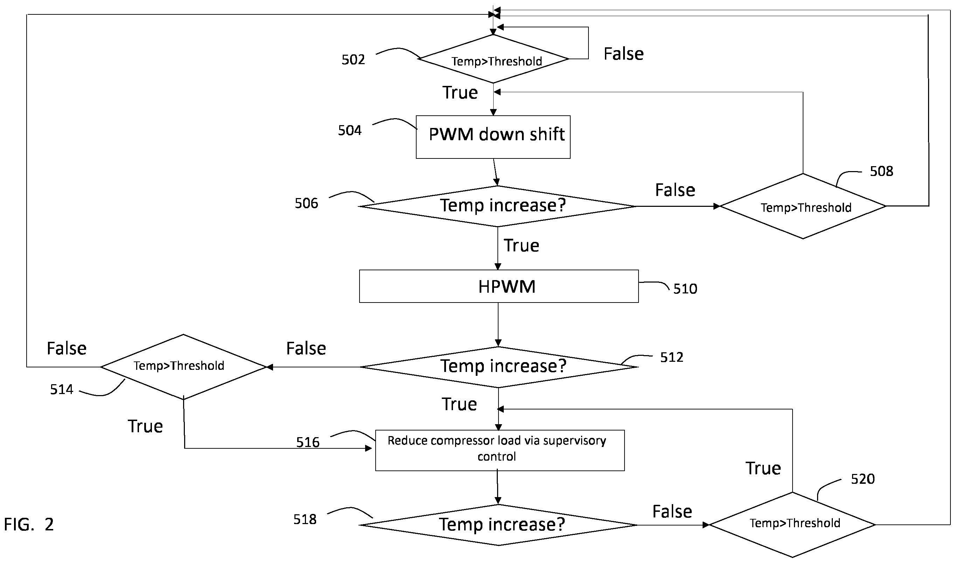

FIG. 2 is a flowchart of a process for controlling temperature of the power switching devices 211 in the AC-DC converter 200 and/or the DC-AC inverter 110. By controlling the temperature of the power switching devices 211 in the AC-DC converter 200 and/or the DC-AC inverter 110, the controller 340 can avoid the need to shut down the air conditioning system 100.

The process of FIG. 2 begins at 502, where the controller 340 determines if the temperature of the power switching devices 211 in the AC-DC converter 200 and/or the DC-AC inverter 110 is greater than a threshold. As noted above, the temperature of the power switching devices 211 in the AC-DC converter 200 and/or the DC-AC inverter 110 is measured by sensors 402. If the temperature of the power switching devices 211 in the AC-DC converter 200 and/or the DC-AC inverter 110 is not greater than the threshold, the process continues to monitor the temperature at 502.

If at 502, the temperature of the power switching devices 211 in the AC-DC converter 200 and/or the DC-AC inverter 110 is greater than the threshold, flow proceeds to 504. At 504, the controller 340 executes a first operation to reduce a switching frequency of the power switching devices 211 in the AC-DC converter 200 and/or the DC-AC inverter 110. The power switching devices 211 in the AC-DC converter 200 and/or the DC-AC inverter 110 may be controlled by the controller 340 using a control signal having a carrier signal. One type of control signal typically used is a pulse width modulation (PWM) signal. At 504, the controller 340 increases (e.g., doubles) the period of the carrier signal of the PWM signal. Increasing the period of the carrier signal of the control signal reduces the frequency of switching events by the power switching devices 211 in the AC-DC converter 200 and/or the DC-AC inverter 110. This can reduce temperature of the power switching devices 211 in the AC-DC converter 200 and/or the DC-AC inverter 110.

From 504 the process flows to 506, where the controller 340 determines if the temperature of the power switching devices 211 in the AC-DC converter 200 and/or the DC-AC inverter 110 has increased from a prior measurement. The controller 340 may wait for a period of time to pass (e.g., 15 to 30 minutes) before measuring the temperature at 506. If the temperature has not increased at 506, flow proceeds to 508 where the controller 340 determines if the temperature of the power switching devices 211 in the AC-DC converter 200 and/or the DC-AC inverter 110 is greater than the threshold. If true, flow proceeds to 504 where the controller 340 again increases the period of the carrier signal of the control signal supplied to the power switching devices 211 in the AC-DC converter 200 and/or the DC-AC inverter 110. Increasing the period of the carrier signal of the control signal at 504 may be limited to predetermined number of attempts (e.g., two), at which point the process will proceed to 510 from 508. If at 508, the temperature of the power switching devices 211 in the AC-DC converter 200 and/or the DC-AC inverter 110 is not greater than the threshold, flow proceeds to 502.

At 506, if the temperature of the power switching devices 211 in the AC-DC converter 200 and/or the DC-AC inverter 110 is has increased, flow proceeds to 510 where the controller 340 executes a second operation to reduce a switching frequency of the power switching devices 211 in the AC-DC converter 200 and/or the DC-AC inverter 110. At 510, the controller 340 uses hybrid PWM (HPWM), where under selected conditions, the power switching devices 211 in the DC-AC inverter 110 are commanded fully "on" for an extended duration, relative to the PWM frequency and in synchronism with inverter phase voltage, resulting in either one phase is fully connected to the positive dc bus or negative dc bus. In HPWM, power switching devices 211 in the AC-DC converter 200 and/or the DC-AC inverter 110 are connected to one section (i.e., positive rail or negative rail) of the DC bus 201 for an extended duration, relative to the PWM frequency. This technique reduces the frequency of switching events by the power switching devices 211 in the AC-DC converter 200 and/or the DC-AC inverter 110, by eliminating switching operations that may be replaced with a fully "on" switching signal.

From 510 the process flows to 512, where the controller 340 determines if the temperature of the power switching devices 211 in the AC-DC converter 200 and/or the DC-AC inverter 110 has increased from a prior measurement. The controller 340 may wait for a period of time to pass (e.g., 15 to 30 minutes) before measuring the temperature at 512. If the temperature has not increased at 512, flow proceeds to 514 where the controller 340 determines if the temperature of the power switching devices 211 in the AC-DC converter 200 and/or the DC-AC inverter 110 is greater than the threshold. If true, flow proceeds to 516 where the controller 340 initiates a reduction in compressor load on the air conditioning system. If at 514, the temperature of the power switching devices 211 in the AC-DC converter 200 and/or the DC-AC inverter 110 is not greater than the threshold, flow proceeds to 502.

At 512, if the temperature of the power switching devices 211 in the AC-DC converter 200 and/or the DC-AC inverter 110 is has increased, flow proceeds to 516. At 516, the controller 340 initiates a reduction in compressor load on the air conditioning system. The controller 340 may initiate a reduction in compressor load on the air conditioning system by sending a control signal (either directly or through an air conditioning controller) to reduce speed of the compressor 104 or maintain the speed of the compressor 104 but reduce refrigerant flow through the compressor 104 (e.g., reduce guide vane openings on the compressor 104).

From 516 the process flows to 518, where the controller 340 determines if the temperature of the power switching devices 211 in the AC-DC converter 200 and/or the DC-AC inverter 110 has increased from a prior measurement. If the temperature has not increased at 518, flow proceeds to 520 where the controller 340 determines if the temperature of the power switching devices 211 in the AC-DC converter 200 and/or the DC-AC inverter 110 is greater than the threshold. If true, flow proceeds to 516 where the controller 340 again initiates reduction of compressor load on the air conditioning system. Reduction of compressor load at 516 may be repeated a predetermined number of times until a limit is reached, at which point the controller 340 will signal a fault and need for shut down. If at 520, the temperature of the power switching devices 211 in the AC-DC converter 200 and/or the DC-AC inverter 110 is not greater than the threshold, flow proceeds to 502. If the temperature has increased at 518, the air conditioning system 100 may need to be shut down.

Although FIG. 2 shows the PWM shift at 504 occurring before the HPWM at 510, the order of these operations may be reversed, so that the HPWM occurs before the PWM shift.

Embodiments of this invention provide temperature control of a drive of an air conditioning system. This allows the air conditioning system to avoid shut down due to excess temperature.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the invention as set out in the appended claims. In addition, many modifications may be made to adapt a particular situation or material to the teachings of the present invention without departing from the scope thereof. Therefore, it is intended that the present invention not be limited to the particular embodiment disclosed as the best mode contemplated for carrying out this present invention, but that the present invention will include all embodiments falling within the scope of the claims.

## Claims

1. An air conditioning system (100) comprising:
a compressor (104) including a motor (102), a condenser (106), and an evaporator (108);
a drive (101) including converter (200) and an inverter (110), the converter (200) and the inverter (110) including power switching devices (211);
a temperature sensor (402) configured to sense a temperature in at least one of the converter (200) and the inverter (110);
a controller (340) configured to communicate with the temperature sensor (402), the controller (340) configured to provide a control signal to the inverter (110), the controller configured to execute:
monitor the temperature;
compare the temperature to a threshold;
when the temperature exceeds the threshold, executing an operation to reduce a switching frequency of the power switching devices (211) in the inverter (110).

2. The air conditioning system of claim 1, wherein the operation to reduce the switching frequency of the power switching devices (211) in the inverter (110) includes increasing a period of a carrier signal of the control signal provided to the power switching devices (211) in the inverter (110).

3. The air conditioning system of claim 1 or 2, wherein the controller (340) is further configured to execute:
after executing the operation to reduce the switching frequency of the power switching devices in the inverter, determining if the temperature has increased;
when the temperature has increased, executing a second operation to reduce the switching frequency of the power switching devices (211) in the inverter (110).

4. The air conditioning system of claim 3, wherein the second operation to reduce the switching frequency of the power switching devices (211) in the inverter (110) includes using hybrid pulse width modulation (HPWM) control of the power switching devices (211) in the inverter (110).

5. The air conditioning system of claim 3 or 4, wherein the controller (340) is further configured to execute:
after executing the second operation to reduce the switching frequency of the power switching devices in the inverter, determining if the temperature has increased;
when the temperature has increased, initiating a reduction in a compressor load on the air conditioning system (100).

6. The air conditioning system of claim 5, wherein initiating the reduction in the compressor load on the air conditioning system (100) includes reducing a speed of the compressor (104); or
wherein initiating the reduction in the compressor load on the air conditioning system (100) includes reducing refrigerant flow through the compressor (104).

7. The air conditioning system of any preceding claim, wherein the converter (200) is a Vienna rectifier.

8. The air conditioning system of any preceding claim, wherein controller (340) is further configured to provide a control signal to the converter (200).

9. A method of controlling an air conditioning system (100) including a compressor (104) including a motor (102), a condenser (106), an evaporator (108) and a drive (101) including a converter (200) and an inverter (110), the converter (200) and the inverter (110) including power switching devices (211), the method comprising:
monitoring a temperature in at least one of the converter (200) and the inverter (110);
comparing the temperature to a threshold;
when the temperature exceeds the threshold, executing an operation to reduce a switching frequency of the power switching devices in the inverter.

10. The method of claim 9, wherein the operation to reduce the switching frequency of the power switching devices (211) in the inverter (110) includes increasing a period of a carrier signal of a control signal provided to the power switching devices (211) in the inverter (110).

11. The method of claim 9 or 10, further comprising:
after executing the operation to reduce the switching frequency of the power switching devices in the inverter, determining if the temperature has increased;
when the temperature has increased, executing a second operation to reduce the switching frequency of the power switching devices (211) in the inverter (110).

12. The method of claim 11, wherein the second operation to reduce the switching frequency of the power switching devices (211) in the inverter (110) includes using hybrid pulse width modulation (HPWM) control of the power switching devices (211) in the inverter (110).

13. The method of claim 11 or 12, further comprising:
after executing the second operation to reduce the switching frequency of the power switching devices in the inverter, determining if the temperature has increased;
when the temperature has increased, initiating a reduction in a compressor load on the air conditioning system (100).

14. The method of claim 13, wherein initiating the reduction in the compressor load on the air conditioning system (100) includes reducing a speed of the compressor (104); or
wherein initiating the reduction in the compressor load on the air conditioning system (100) includes reducing refrigerant flow through the compressor (104).

15. The method of any of claims 9 to 14, further comprising, when the temperature exceeds the threshold, executing an operation to reduce a switching frequency of the power switching devices (211) in the converter (200).
